(19) Europäisches Patentamt

European Patent Office

Office européen des brevets

(11) **EP 1 619 571 A1**

(12) **EUROPEAN PATENT APPLICATION**

(43) Date of publication:
25.01.2006 Bulletin 2006/04

(51) Int Cl.:
*G06F 1/00* (2006.01)    *H04N 7/24* (2006.01)

(21) Application number: 04017019.3

(22) Date of filing: 19.07.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **Sony Deutschland GmbH
50829 Köln (DE)**

(72) Inventor: **Szucs, Paul
c/o Stuttgart Technology Center
70327 Stuttgart (DE)**

(74) Representative: **Müller - Hoffmann & Partner
Patentanwälte,
Innere Wiener Strasse 17
81667 München (DE)**

(54) **Method for providing protected audio/video content**

(57)    A method for providing protected content is proposed, wherein content usage rights information (CURI) and/or usage state information (USI) is embedded into obtained primary data (PDat) which serves as a basis for a content item (CI) to be provided thereby providing said primary data (PDat) with the embedded content usage rights information (CURI) and/or usage state information (USI) as said content item (CI).

Fig. 8

```
┌─────────────────────────────┐
│   Obtain Primary Data PDat   │  (a)
│      for Content Item CI     │
└─────────────────────────────┘
              │
              ▼
┌─────────────────────────────┐
│     Obtain Usage Rights      │  (b)
│   Information CURI/Usage      │
│   State Information USI for   │
│       Content Item CI        │
└─────────────────────────────┘
              │
              ▼
┌─────────────────────────────┐
│   Embedding Usage Rights     │  (c)
│   Information CURI/Usage      │
│  State Information USI into   │
│   Primary Data PDat ⇒        │
│     Secondary Data SDat      │
└─────────────────────────────┘
              │
              ▼
┌─────────────────────────────┐
│      Provide SDat with       │  (d)
│   Embedded CURI/USI as       │
│  Content Item CI for Content  │
│    Protection and Copy       │
│      Management System       │
└─────────────────────────────┘
```

**Description**

The present invention relates to a method for providing protected audio/video content.

The present invention relates in particular to a method for providing protected audio/video content in or for a content protection and copy management system which is based on a network of devivces. More particular, the present invention relates to a definition of and to a method for the communication of audio/visual content usage rules in a content protection copy management system in a consumer environment.

Networks of devices and therefore methods for providing data and content within procedures of operating said networks become more and more important. Several security aspects arise also in connection with respect to audio/visual content protection and copy management requirements when networked devices are provided with respective content items.

Known methods for providing protected content and in particular known methods for providing protected content usage rules USI in or for a content protection and copy management system have a comparably high data load with respect to the content protection and copy management requirements.

It is an object underlying the present invention to provide a method for a more efficient and more practicable communication of usage rules UR or usage state information USI in or for audio/video content and audio/video content streams.

The object is achieved by a method for providing content according to independent claim 1. Preferred embodiments of the inventive method for providing content are within the scope of the dependent sub-claims. The object is further achieved by a system or an apparatus, by a computer program product, and by a computer readable storage medium according to independent claims 25, 26, and 27, respectively.

According to the present invention the proposed method for providing content is in particular adapted to work in or for a content protection and copy management system and comprises processes of (a) obtaining primary data as or being representative for a content item to be provided, of (b) obtaining content usage rights information and/or usage state information which is descriptive for usage rights or the usage state with respect to the content item to be provided, of (c) embedding said content usage rights information and/or usage state information or a derivative thereof into said primary data or a derivative thereof, thereby generating secondary data as or being representative for a content item to be provided and of (d) providing said secondary data or a derivative thereof as said content item to be provided with the embedded content usage rights information and/or usage state information.

It is therefore a key idea of the present invention in its broadest sense to embed within a method for providing protected content usage rights information and/or usage state information into obtained primary data which serve as a basis for a content item to be provided and to thereby provide said primary data with the embedded content usage rights information and/or usage state information as said content item.

Said content usage rights information and/or usage state information may be embedded in a structured binary coded form within said primary data or said derivative thereof. This has the advantage that interoperability can be achieved, in particular by using a binary code as shown in table 2.

Alternatively or additionally, said content usage rights information and/or said usage state information may be embedded repeatedly - in particular regularly - within said primary data or said derivative thereof. This is of particular advantage when performing with continous content streams, i. e. within DVB or the like.

Both latter measures - taken alone or in combination - ensure efficiency, interoperability, and user friendliness with respect to said content usage rights information (CURI) and/or usage state information (USI) and its handling.

According to a preferred embodiment of the inventive method for providing content said process (a) of obtaining said primary data may comprise a sub-process of generating said primary data partly or completely.

On the other hand, said process (a) of obtaining said primary data may comprise a sub-process of partly or completely receiving said primary data or a preform thereof, in particular from an external source.

Said process (b) of obtaining content usage rights information (CURI) and/or usage state information may comprise a sub-process of partly or completely generating said content usage rights information and/or usage state information, in particular in a given target format and/or in particular with a given target scope of rights.

Alternatively or additionally, said process (b) of obtaining content usage rights information and/or usage state information may comprise a sub-process of partly or completely receiving said content usage rights information and/or usage state information, in particular from an external source and/or in a given input format.

One known format may be used as said input format. Interoperability is thereby achieved by conversion of the known format into a particular simple and common UR/USI format.

Said received content usage rights information and/or usage state information may be subjected to a sub-process of usage rights format conversion in order to convert the input format of said received content usage rights information and/or usage state information to a given target format.

In said sub-process of usage rights format conversion said content usage rights information and/or usage state information may also be converted in order to have all cover given a target scope of rights.

A single data item may be provided as said content item or as a part thereof, in particular a single file, a single image or the like.

Alternatively or additionally, a data stream may be provided as said content item or as a part thereof, in particular a sequence of files, a sequence of images and/or sounds or the like.

A further preferred embodiment of the inventive method may comprise a process for multiplexing several content items or preforms thereof and in particular for multiplexing the respective content usage rights information and/or usage state information of multiplexed content items.

The process (c) of embedding said content usage rights information and/or usage state information or a derivative thereof into said primary data or a derivative thereo may be made capable of a sub-process of multiplexing in order to combine primary data of a plurality of content items to be provided into a common multiplexed content stream.

Further, the process (c) of embedding said content usage rights information and/or usage state information or a derivative thereof into said primary data or a derivative thereof may be made capable of embedding content usage rights information and/or usage state information about content items available in the future.

From said content usage rights information and/or usage state information other components of auxiliary data already defined may be formed.

In said process (c) of embedding the target format for said content usage rights information and/or usage state information and/or the target scope for said content usage rights information and/or usage state information may be chosen in accordance to an underlying content protection and copy management system or CPCM system.

In said process (c) of embedding the target format for said content usage rights information and/or usage state information (USI) and/or the target scope for said content usage rights information (CURI) and/or usage state information (USI) may be chosen in order to support and/to cover a minimal and/or optimized set of content usage rights information (CURI) and/or usage state information (USI) with respect to an underlying content protection and copy management system or CPCM system.

Said set of content usage rights information and/or usage state information may comprise a set of mandatory content usage rights information and/or usage state information and an optional or assertive set of content usage rights information and/or usage state information.

Each content item to be provided may be provided with at least one item of said mandatory set of content usage rights information and/or usage state information.

Said set of content usage rights information and/or usage state information may comprise one or an arbitrary plurality of items of the group of items which consists of copy control - in particular as mandatory, propagation restriction - in particular as mandatory, concurrent render count, disable content scrambling and time-based content usage.

The usage state information for copy control may be adapted to cover one or an arbitrary plurality of items of the group of items which may consist of:

- **"copy never"** (CN) according to which no copy of such content is allowed,

- "**copy once**" (C1) according to which exactly one single copy of the content can be created,

- **"copy one generation"** (C1G) according to which the content can be copied repeatedly, but each copy is then marked as copy no more,

- "**copy no more**" (CNM) according to which no copies are allowed,

- **"copy control not asserted"** (CCNA) according to which no restriction is placed upon copying of the content.

Additionally or alternatively, the usage state information for propagation restriction is adapted to cover one or an arbitrary plurality of items of the group of items which may consist of:

- **"restrict to local environment"** (RTLE) according to which an item of content with this state applied will not be allowed to propagate by electronic transfer beyond the close vicinity of the point at which that content entered the consumer environment, within a respective authorized domain (AD),

- **"restrict to authorized domain** (AD)**"** (RTAD) according to which an item of content with this state applied will not be allowed to propagate beyond the set of CPCM-compliant equipment belonging to the user receiving the content, thus allowing the user to use the content at home, access it from a remote location, for example a second home or from a mobile handset,

- **"restrict to content protection and copyright management system (CPCM)"** (RTCPCM) according to which an item of content is to remain protected by the CPCM framework, but propagation is allowed to any other authorized domain (AD),

- **"propagation restriction not asserted"** (PRNA) according to which an item of content can be redistributed also outside of the content protection and copyright management system or CPCM framework.

A generation and/or the display of icons may be enabled which indicates allowed and/or disallowed functionalities with respect to the respective provided content item.

It is a further aspect of the present invention to provide a system or an apparatus which is adapted and arranged and which comprises means for realizing the inventive method for providing content and the steps thereof.

It is still a further aspect of the present invention to provide a computer program product comprising computer program means which is adapted and arranged in order to realize the inventive method for providing content and the steps thereof and the system when it is executed on a computer or a digital signal processing means.

Still further, a computer readable storage medium is provided comprising a computer program product according to the present invention.

Usage rights information (CURI) and/or usage state information (USI) in particular for protected audio/video content for a content protection and copy management system based on a network of devices, are proposed according to the present invention comprising mandatory items only.

Said usage rights information (CURI) and/or usage state information (USI) preferably comprise one or an arbitrary plurality of items of the group of items which consists of copy control - in particular as mandatory, propagation restriction - in particular as mandatory, concurrent render count - in particular as assertive, disable content scrambling - in particular as assertive - and time-based content usage - in particular as assertive.

Within said usage rights information (CURI) and/or usage state information (USI) the usage state information (USI) for copy control may be adapted in order to cover one of the items of the group of items which consists of:

- **"copy never"** (CN) according to which no copy of such content is allowed,
- **"copy once"** (C1) according to which exactly one single copy of the content can be created,
- **"copy one generation"** (C1G) according to which the content can be copied repeatedly, but each copy is then marked as copy no more,
- **"copy no more"** (CNM) according to which no copies are allowed,
- **"copy control not asserted"** (CCNA) according to which no restriction is placed upon copying of the content.

Additionally or alternatively, said usage rights information (CURI) and/or usage state information (USI) may be adapted in order to cover one of the items of the group of items which consists of:

- **"restrict to local environment"** (RTLE) according to which an item of content with this state applied will not be allowed to propagate by electronic transfer beyond the close vicinity of the point at which that content entered the consumer environment, within a respective authorized domain (AD),
- **"restrict to authorized domain (AD)"** (RTAD) according to which an item of content with this state applied will not be allowed to propagate beyond the set of CPCM-compliant equipment belonging to the user receiving the content, thus allowing the user to use the content at home, access it from a remote location, for example a second home or from a mobile handset,
- **"restrict to content protection and copyright management system (CPCM)"** (RTCPCM) according to which an item of content is to remain protected by the CPCM framework, but propagation is allowed to any other authorized domain (AD),
- "**propagation restriction not asserted" (PRNA)** according to which an item of content can be redistributed also outside of the content protection and copyright management system or CPCM framework.

Said usage rights information (CURI) and/or usage state information (USI) may further be adapted in order to cover the items of **"concurrent render count",** in particular in order to be able to restrict the number of concurrent renderings of an item of content.

Said usage rights information (CURI) and/or usage state information (USI) may further be adapted in order to cover the items of **"disable content scrambling",** in particular in order to be able to not allow to protection of content by means of cryptographic tools, i. e. by scrambling.

Said usage rights information (CURI) and/or usage state information (USI) may further be adapted in order to cover the items of **"time-based restriction of content usage",** in particular in order to be able to allow a temporary usage of a given content item only.

In said usage rights information and/or usage state information according a first or usage property information part may be used in order to indicate one of said usage rights information and/or usage state information items and a second or usage parameter information part may be used in order to further specify the usage rights information and/or usage state information item indicated by said first or usage purpose information part.

Additionally, within said usage rights information and/or usage state information said first or usage property information part may be mapped in a one-to-one relationship onto a first finite binary code, in particular consisting of four binary bits and/or wherein said second or usage parameter information part may be mapped in a one-to-one relationship onto a second finite binary code, in particular consisting of four binary bits.

Additionally and alternatively, within said usage rights information and/or usage state information said first or usage property information part may be embedded within said usage rights information and/or usage state information as an ordered concatenation of the bits of said first finite binary code of the respective usage rights information and/or usage state information item, and/or said second or usage parameter information part may be embedded within said usage rights information and/or usage state information as an ordered concatenation of the bits of said second finite binary code of the further specification of the respective usage rights information and/or usage state information item.

Additionally and alternatively, a usage rights information and/or usage state information is proposed which is embedded within said usage rights information and/or usage state information as an ordered concatenation of the bits of said first finite binary code of the respective usage rights information and/or usage state information item for said first or usage property information part and the bits of said second finite binary code of the further specification of the respective usage rights information and/or usage state information item for said second or usage parameter information part.

Preferably, said usage rights information and/or usage state information may ne formed with respect to said bits of said first finite binary code of the respective usage rights information and/or usage state information item for said first or usage property information part and with respect to said bits of said second finite binary code of the further specification of the respective usage rights information and/or usage state information item for said second or usage parameter information part according to the following table

| Usage_ _property (Uprop) | Description | Usage_ _parameter (Upar) | Description | Argument |
|---|---|---|---|---|
| 0000 | Copy Control | 0000 | Copy Never | None |
| | | 0001 | Copy Once | None |
| | | 0010 | Copy One Generation | 8 bits: Maximum number of copies; 0x0 means no restriction; 0x1 is equivalent to Copy Once |
| | | 0011 | Copy No More | None |
| | | 0100 | Copy Control Not Asserted | None |
| | | 0101 - 1111 | Reserved for future use | None |
| 0001 | Propagation Restriction | 0000 | Restrict to local environment | None |
| | | 0001 | Restrict to authorised domain | None |
| | | 0010 | Restrict to protected realm | None |
| | | 0011 | Propagation restriction not asserted | None |
| | | 0100 - 1111 | Reserved for future use | None |

Table continued

| Usage_ _property (Uprop) | Description | Usage_ _parameter (Upar) | Description | Argument |
|---|---|---|---|---|
| 0010 | Concurrent Render Restriction | 0000 | Reserved | 8 bits: Maximum number of concurrent renderings |
| 0011 | Disable Content Scrambling | 0000 | Reserved | None |
| 0100 | Time-based Usage Restriction | 0000 | From (absolute data/time) | 40 bits: as for *start_time* field in EIT section |
| | | 0001 | Until (absolute data/time) | 40 bits: as for *start_time* field in EIT section |
| | | 0010 | For (relative time) | 24 bits: as for duration field in EIT section |
| | | 0011 - 1111 | Reserved | None |
| 0101 - 1111 | Reserved for future use | 0000-1111 | Reserved | None |

In the following these and further aspects of the present invention will be become more elucidated by the following remarks:

The invention inter alia relates to a definition of and method for the communication of audio-visual content usage rules e. g. in a content protection and/or copy management system for instance in the consumer environment.

The invention provides a definition of the complete set of usage rules for audio/visual content in a consumer domain as well as a method for communicating the same within - for example - a content protection and digital rights management system. The set of usage rules is designed in order to be minimal in its extension and in order to encourage a consumer understanding and acceptance while still enabling the full range of reasonable constrains required by relevant content providers.

In the following the present invention will be discussed in more detail by taking reference to the accompanying Figures.

**Fig. 1** is a schematical diagram and elucidates an example of a consumer environment for audio-visual content acquisition and usage to which the present invention may be applied.

**Fig. 2** is a schematical block diagram of a process for the generation of CPCM usage rights settings and CPCM content streams as a preferred embodiment of the present invention.

**Fig. 3** is a flow chart which describes processes which may take place in a preferred embodiment of the present invention and in particular in a usage rights converter.

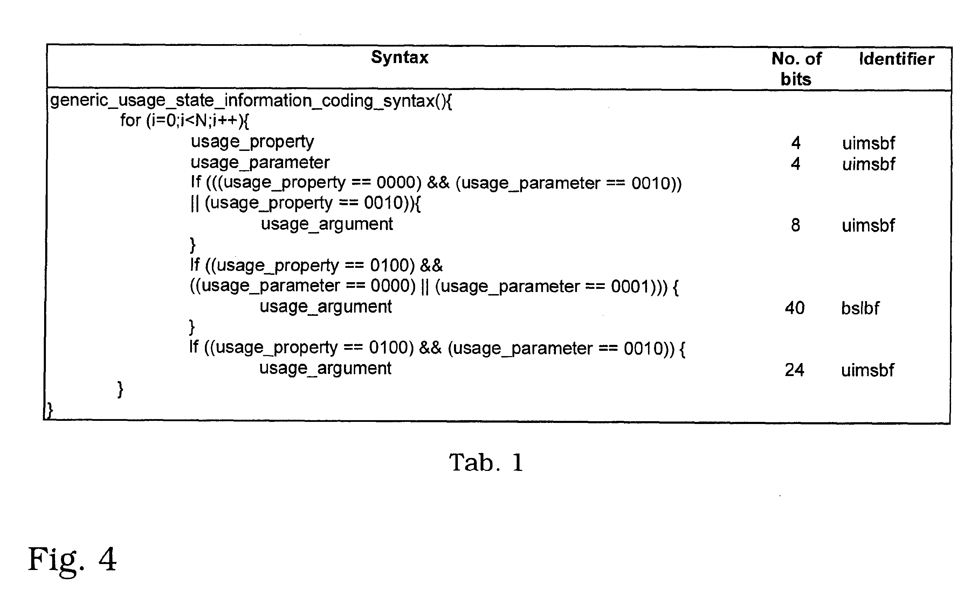

**Fig. 4** is a table Tab. 1 which shows a generic preferred coding of the set of usage properties, parameters, and arguments.

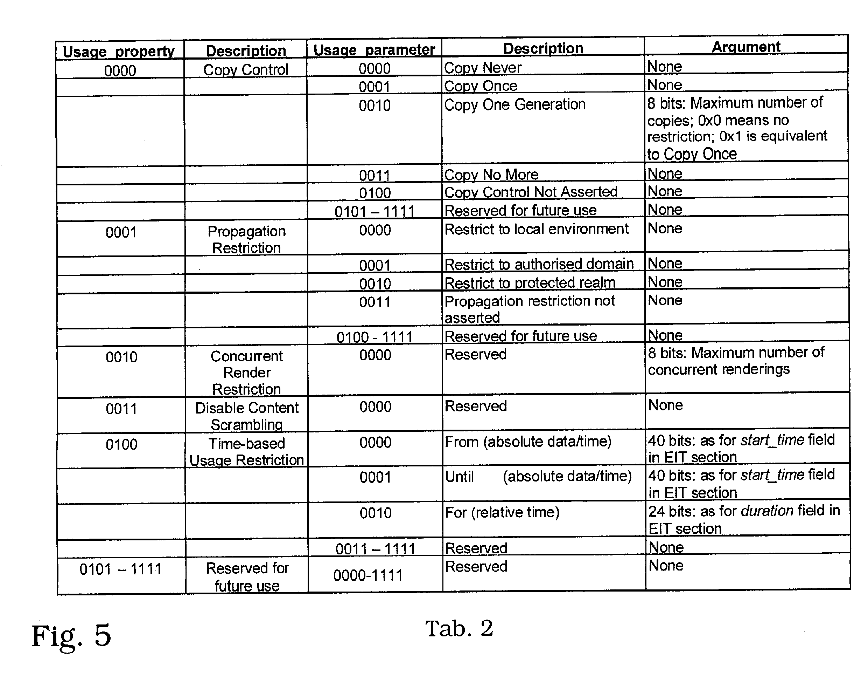

**Fig. 5** is a table Tab. 2 which shows a syntax for each usage state information property and the respective usage parameters and arguments.

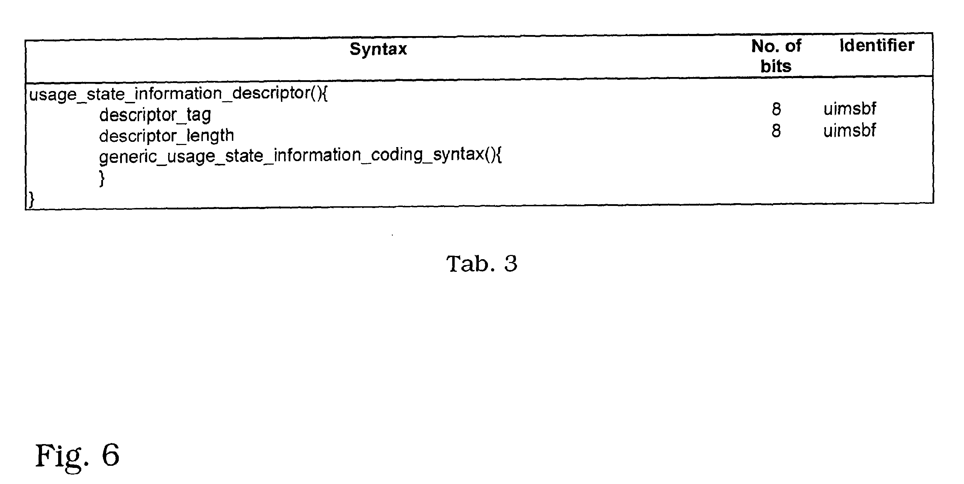

**Fig. 6** is a table Tab. 3 which shows a preferred syntax of the usage state information descriptor in DVB SI.

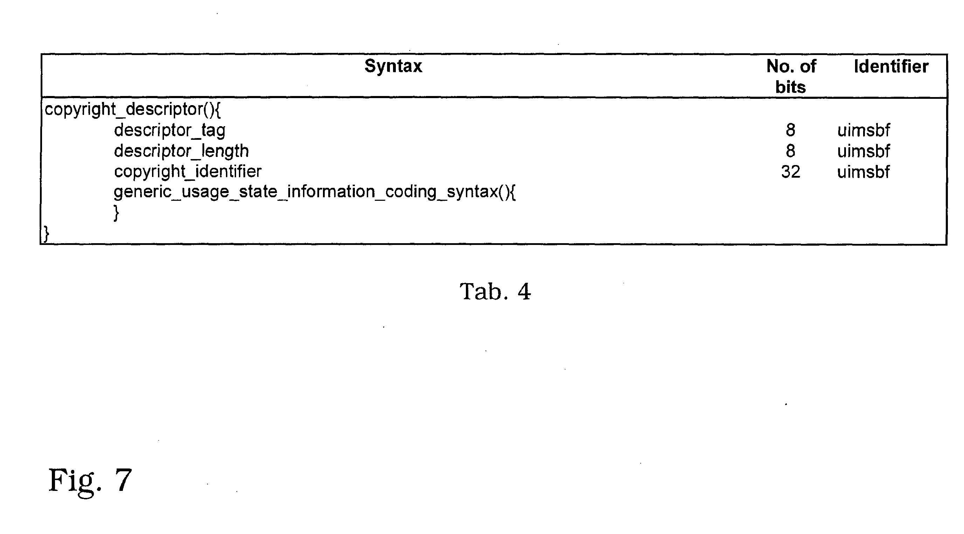

Fig. 7 is a table Tab. 4 which shows a preferred syntax of the usage state information descriptor when applied to the MPEG-2 Systems copyright descriptor.

Fig. 8. 9 is a schematical block diagram which elucidates some basic aspects of an embodiment of the present invention.

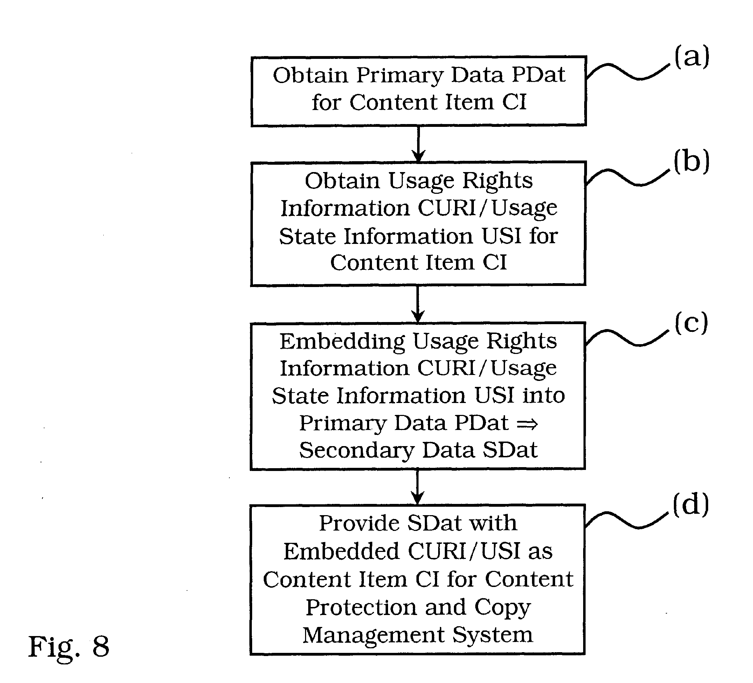

Fig. 8 is a flow chart describing some basic aspect of an embodiment of the inventive method for providing content. In a first process (a) primary data PDat are obtained as or being representative for a content item CI to be provided as or being representative for a pre-form thereof. Then, in a second process (b) content usage rights information CURI and/or usage state information USI which is descriptive for usage rights UR or the usage state US with respect to the content item CI to be provided are obtained, In a third process (c) said content usage rights information CURI and/or usage state information USI or a derivative thereof are embedded into said primary data PDat or a derivative thereof. Thereby, secondary data SDat are generated as or being representative for a content item CI to be provided. Finally, (d) said secondary data SDat or a derivative thereof are provided and/or presented as said content item CI together with the embedded content usage rights information CURI and/or usage state information USI.

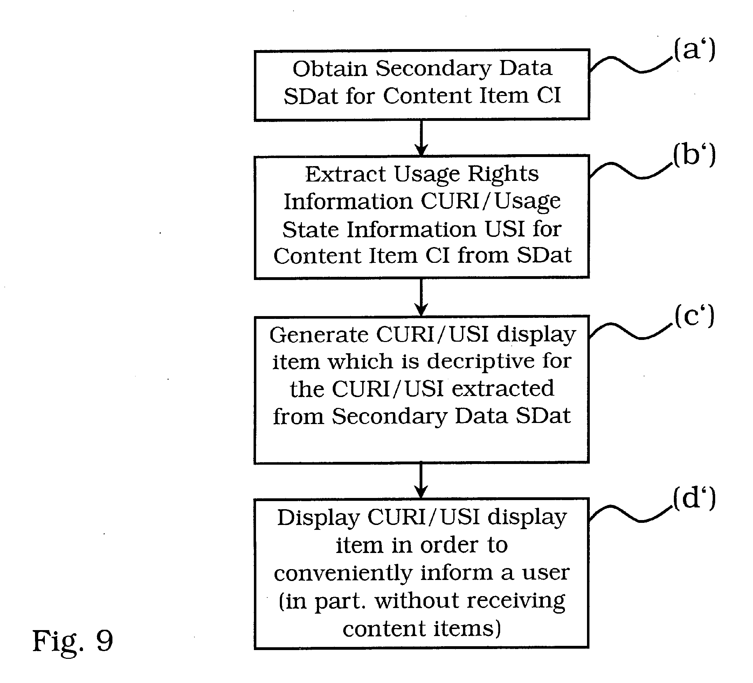

Fig. 9 is a flow chart describing a basic aspect of another embodiment of the inventive method for providing content. In a first process (a') secondary data SDat are obtained which comprise a content item CI as such as well as the respective content usage rights information CURI and/or the respective usage state information USI for the content item CI. In a following process (b') said content usage rights information CURI and/or the respective usage state information USI for the content item CI is extracted, in particular without receiving or evaluating the content item as such. Then in a following process (c') a CURI/USI display item is generated from said secondary data SDat which is representative for said content usage rights information CURI and/or the respective usage state information USI for the content item CI. Finally, in a process (d') said CURI/USI display item is display thereby informing a user with respect to said content usage rights information CURI and/or the respective usage state information USI for the content item CI even without evaluating said content item as such thereby achieving a high degree of user friendliness.

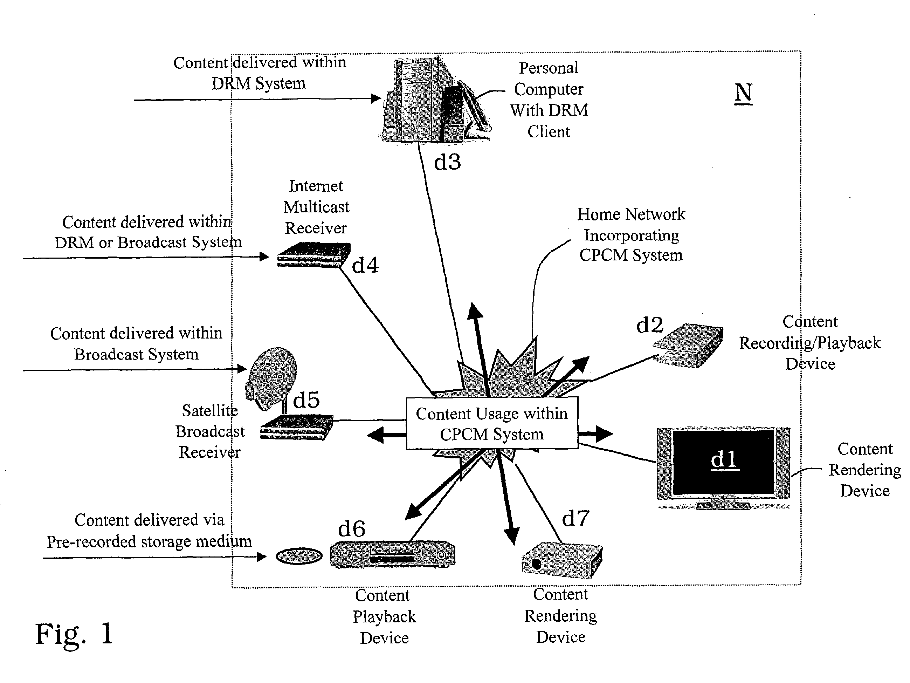

Fig. 1 is a schematical diagram illustrating an example of a consumer environment for audio-video content acquisition and usage to which the present invention can be applied. Within a network N certain devices d1 to d7 which have audio and/or video capabilities and/or functionalities are connected with respect to each other. Devices d1 and d7 have content rendering and/or display capabilities and/or functionalities and may receive respective content items CI from devices d2 to d6. Devices d3 to d6 may receive respective content items CI or primary and/or secondary data PDat and SDat, respectively, thereof e. g. from external sources. Device d2 has content recording and content playback capabilities.

Protected audio-video content can reach the consumer via many different channels, each having its own kind of protection system and content usage rules.

Fig. 1 shows a typical consumer environment consisting of a network of AV devices able to receive protected content from various channels.

In the realm of DRM, several Rights Expression Languages (REL) are established, even standardized, in the prior art, e.g. XrML [6], ODRL [7]. In a web-based computing environment it is advantageous to deploy such RELs based on XML, as much of the processing tools or software is generally already built into the devices (networked PC, browser). Also, the relatively inefficient data formats of XML-based RELs are not an issue when a single item of content is being delivered to a consumer, for example within an internet DRM system.

In a broadcast environment, however, many, even hundreds of services are available to the consumer in parallel. It is desirable to inform the user, via his receiving equipment, of any eventual content usage restrictions, or rights associated with content items, for currently available content, or scheduled future content in advance, for example as icons accompanying services generally listed in an on-screen EPG.

To deploy such an XML-based REL in a broadcast environment has the following disadvantages:

- A relatively large proportion of the available data transmission capacity would be needed.

- Many types of broadcast receiver are not equipped with functions and software generally needed for internet or web browser based operations, or the interpretation of XML format data.

Therefore it is the goal of the present invention to provide a method for carrying such USI in broadcast content streams in an efficient manner, and one more suitable for all types of broadcast receiver. This method can also be used to carry such USI within a CPCM system for the consumer environment, i. e. among AV storage, processing, and rendering devices in the home network.

An additional advantage of the present invention is that the method of embedding USI in an item of content provides a convenient tool for the interoperable exchange of content between different DRM or content protection systems. This is due to the fact that no additional data is required to be passed between such systems, apart from the item of content itself, which contains all necessary information (USI and auxiliary data) pertaining to its allowed usage in the compliant domain.

The method is summarized as providing:

- Broadcast-friendly format for the carriage of content USI, i.e. within MPEG-2 Transport Streams, or MPEG-2 Program Streams, which can be utilized directly by broadcasters or content aggregators to signal USI for both currently available channels and transmissions in the future, in a consumer-side CPCM system.

- Broadcast-friendly format for the carriage of content USI, i.e. within MPEG-2 Transport Streams, or MPEG-2 Program Streams, which can be utilized by content recording and/or playback devices in the consumer environment to convert from another protection system's USI format to the a common CPCM system USI format.

- Tools to convert XML-based REL USI to the proposed broadcast-friendly format for insertion into the broadcast MPEG-2 Transport Stream, at the content aggregation or broadcast head-end equipment.

- Tools to convert XML-based REL USI to the proposed broadcast-friendly format for a DRM client software at the consumer side which ingests protected content into a broadcast-oriented consumer CPCM system.

MPEG IPMP [1] is an ISO/IEC Standard defining a DRM framework for MPEG content. It includes the Extensible Rights Markup Language (XrML) [6] as the Rights Expression Language to provide the complete set of possible Usage Rules (UR) for IPMP content. However, this standard is too feature-rich and complicated to be used for the practical realization of an interoperable DRM framework encompassing all classes of consumer audio-visual devices. Indeed, an XML-based language is not suitable for the complete spectrum of consumer entertainment devices, due to the memory and processing resources necessary to work with it.

The Open Digital Rights Language (ODRL) [7] does indeed provide a simpler set of UR than XrML, but is still much too powerful for a common baseline approach for CPCM in the consumer environment.

Both XrML and ODRL are provide full DRM rights expression tools, covering all types of media, and commercial transactions and billing, for example. A CPCM system does not require such functionality and can omit such features from its pre-defined set of USI.

The TV-Anytime Forum (TVAF) recently published a specification for Rights Management and Protection for broadcast content [4]. RMPI and RMPI-MB are applicable to the same realm as the current invention, but the TVA/RMPI is not fully suitable for horizontal market interoperable CPCM frameworks and does not include all necessary tools required for such. Apart from that, some aspects also imply a greater burden of implementation for manufacturers of compliant consumer equipment. The present invention presents an alternative scheme to TVA RMPI, relying more on a fixed CPCM framework and regime for content protection management, thus providing a simpler and clearer framework for the consumer.

CPCM USI Format

The format suitable for broadcast and home network CPCM systems is some form of structured binary coded data that can be embedded repeatedly within the content data file or stream. The pre-defined structure and coding means that many of the often extensive header tags necessary with XML-based usage rule coding schemes can be omitted. Each coded usage rule setting that is translated then becomes a pre-defined 8-bit binary value, Instead of text-form delimiters. Of course, eventual argument fields might not be able to be compressed.

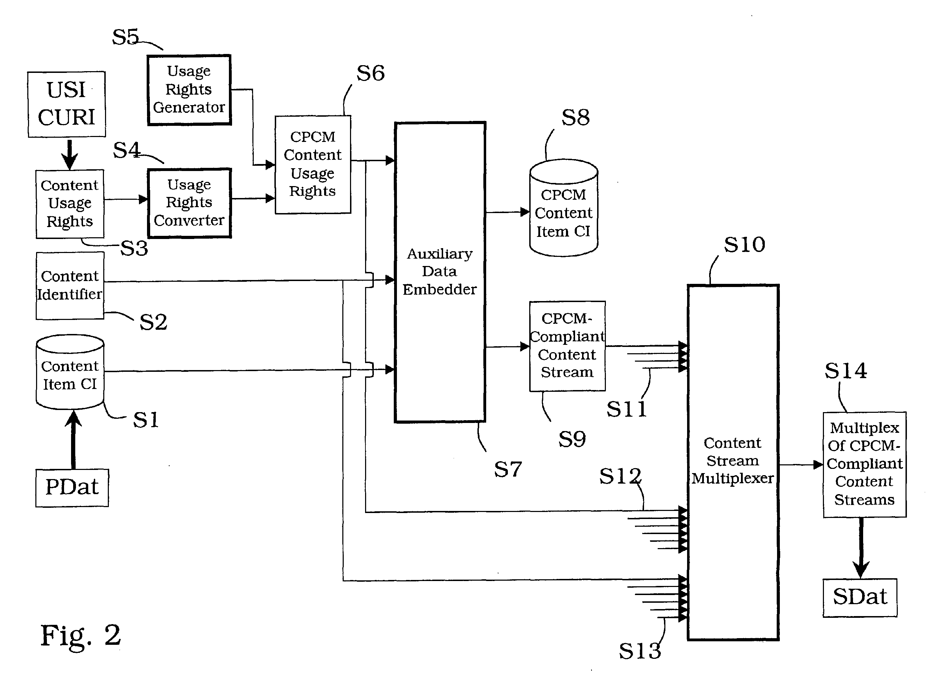

**Fig. 2** shows the general process of generating an AVC content item or transport or broadcast stream of content for the CPCM system.

Process 1 yields the AV content to be managed and protected by the CPCM System. In the prior art, this content can have a content identifier obtained by process 2 and content usage rights associated with it and obtained by process 3, but often provided separately from the content item itself, in a separate file, or stored in a database.

In process 4 the usage rights converter involves the parsing and generation of the equivalent usage rights according to the CPCM System. Its output is the binary coded set of data corresponding to the CPCM System and broadcast friendly usage rights or USI data according to process 6. The USI data can also be generated directly by a usage rights generator tool or process 5.

Process 7, the auxiliary data embedder, inserts the CPCM content usage rights, or USI, into the CPCM compliant content item CI stored data file according to process 8, or the CPCM compliant content stream according to process 9, depending on the application at hand. One feature of the invention is that such USI data is repeated regularly within the CPCM Content Item or CPCM compliant content stream, to facilitate the quick and correct interpretation of the content usage rights when the receiving device of such content performs random access to the content, for example during live broadcast while hopping channels on the broadcast receiver.

As is common with digital broadcast systems, many such individual content streams, or services, can be multiplexed (process 11) to form a content stream containing several services. The service multiplexer (process 10) collects the content identifiers (process 13) USI data (process 12) for all services to be carried in the multiplex. It can also collect this information relating to content scheduled in the future, in order to provide advance information about the usage rights in advance. Process 14 yields the resulting multiplex of content services including all USI for the services contained and scheduled content.

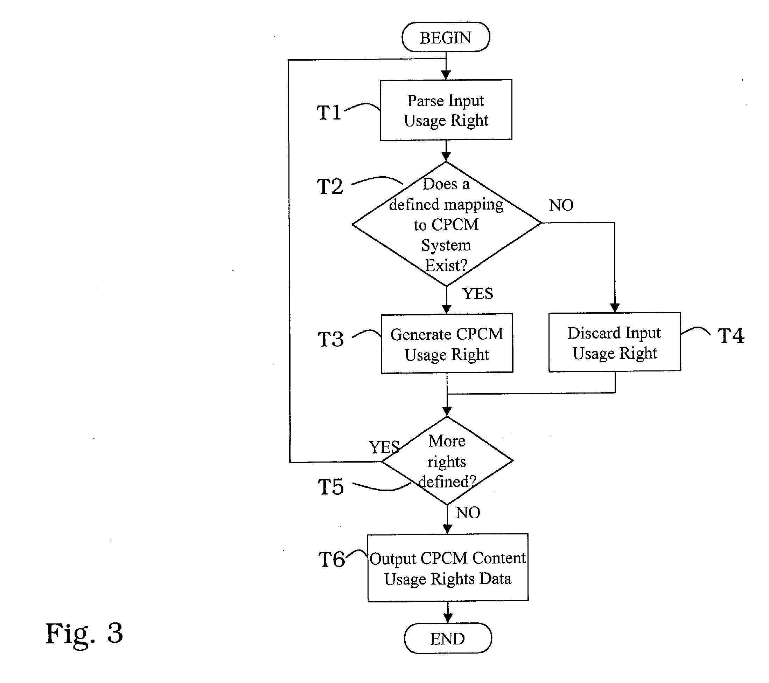

**Fig. 3** shows the flow diagram of process 4 in the previous diagram, for the case when the input usage rights are in the form of a text format, for example one of the markup languages established in the prior art.

Each usage right, usually encoded with a "tag" section, is interpreted, and the equivalent usage right is generated on the basis of pre-defined mappings from the input format. Usage rights for which no mapping is defined in the CPCM USI are ignored.

When all input usage rights have been parsed and converted, the output CPCM usage rights data, or USI, is generated. This is input to the Auxiliary Data Embedder, which combines the USI with the content as described previously.

The Auxiliary Data Embedder could also consist of a multiplexer, which combines several content items, or streams, into a multiplexed content stream, as commonly used in broadcast systems, for example DVB.

The Auxiliary Data Embedder could also embed USI about content items available in the future.

The USI could form another component of already defined auxiliary data defined in the broadcast system, for example the Service Information [8] in the case of DVB. Such a preferred embodiment is described later.

One advantage of the present invention becomes evident when the decoding process in the consumer environment is considered, both at the point of first acquisition of CPCM complaint protected content, and after storage (if allowed by the USI) and subsequent retrieval by any rendering device in the home network. Because the USI has already been converted to the CPCM System compliant format, no renewed interaction with the originating DRM or CA system is necessary to establish the usage rights for that content. All CPCM devices accessing the content are able to process the content and abide by the usage rules because they are stored and embedded within the content file or stream in a format easily processable by those devices, in the DVB example, as an additional descriptor within the service's or content item's associated SI.

Another feature of the invention is the display of icons indicating the allowed or disallowed functionality with respect to the received content on the rendering device's graphical user interface, allowing the user to know in advance how he is able to use that content.

A typical feature of an EPG function is to show information about programming content, or events, in the future. In the same way, the accompanying USI in the SI can be used to indicate to the user his available options for that content item available in the future, alternatively the user interface could blank out functionality that is apparently disallowed by the USI.

Optimized, Minimal Set of USI

This section provides a definition of the set of Usage Rules (UR) for audio-visual content in the consumer environment, and methods of communication of this information with the associated content, both prior to content reception in a consumer's domain (in the delivery channel), and for the subsequent life of the content in the domain (on all devices which can use the content, networked devices in the home(s), also in the consumer's private vehicle(s) and on mobile handheld devices.

URs are communicated within the CPCM Framework by encoding them in a pre-defined scheme. Such data is referred to as "Usage State Information" (USI).

The complete set of Usage Rules for a CPCM Framework is defined here. The URs are defined as a set of Properties applied to an item of content. This set is deemed to be complete in terms of the minimum set of necessary controls with audio-visual content functionality in the consumer environment.

CPCM Framework Content Usage Rules (UR)

According to the invention, there are two kinds of UR Property, and hence derived Usage State Information (USI) - Mandatory and Assertive.

Mandatory USI: Any item of CPCM content must always have one of the Mandatory USI field's states applied to it.

Assertive USI: The presence of Assertive USI implies that the associated restriction/concession is being imposed/granted. If a particular Assertive USI field is not present with any item of content then that restriction/concession is not imposed/granted.

Assertive USI is orthogonal to the Mandatory USI, i.e. each Assertive USI field can be applied with any of the Mandatory USI field states.

In the case of content Copy, the generated new instance of content generally inherits the non-Copy USI of the original instance.

Each UR Property is described in the following sub-sections.

Copy Control

A simple model for copy control USI is already largely established in the prior art. It is adopted as forming one component of the CPCM Framework UR. This provides the options for marking content in one of five states:

- Copy Never (CN) - no copy of such content is allowed.

- Copy Once (C1) - exactly one single copy of the content can be created.

- Copy One Generation (C1G) - the content can be copied repeatedly, but each copy is then marked "Copy No More". An optional argument for the C1G state is the maximum number of copy instances allowed. In an actual CPCM System this could be left variable, to be set explicitly for each item of content, or not needed to be set and a global maximum value is enforced in that CPCM system.

- Copy No More (CNM) - see above; no copies are allowed.

- Copy Control Not Asserted (CCNA) - no restriction is placed upon copying of the content.

A Copy action on content bearing either the C1or the C1G state produces a new instance of that content bearing the CNM state.

In the CPCM Framework, the Copy Control USI Property is Mandatory USI.

$$C = 1 \text{ of } \{CN, C1, C1G, CNM, CCNA\}$$

Propagation Restriction

Some content providers maintain the commercial requirement to restrict the propagation of valuable content to within a certain realm, once the content has been acquired by a consumer.

The CPCM Framework offers a UR to characterize this property in content. The following states are valid for the Propagation Restriction Property:

- Restrict to Local Environment (RTLE) - an item of content with this state applied will not be allowed to propagate by electronic transfer beyond the close vicinity of the point at which that content entered the consumer environment, within the respective Authorized Domain (AD). In practical terms this could mean the Local Area Network (LAN) in which the receiving device is connected, for example in the user's main dwelling, i.e. excluding live transfer to the secondary dwelling or to a mobile device.

- Restrict to Authorized Domain (RTAD) - an item of content with this state applied will not be allowed to propagate beyond the set of CPCM-compliant equipment belonging to the user receiving the content, thus allowing the user to use the content at home, access it from a remote location, for example a second home or from a mobile handset.

- Restrict to CPCM (RTCPCM) - the item of content is to remain protected by the CPCM Framework, but propagation is allowed to any other AD.

- Propagation Restriction Not Asserted (PRNA) - the item of content can be redistributed also outside of the CPCM Framework. In practical terms this would be the equivalent of allowing uncontrolled sharing of the content in unprotected form, like the present-day P2P sharing scenario.

In the CPCM Framework, the USI Propagation Restriction Property is Mandatory USI.

$$R = 1 \text{ of } \{RTLE, RTAD, RTCPCM, PRNA\}$$

Concurrent Render Count

Some content providers maintain the commercial requirement to be able to restrict the number of concurrent renderings of an item of content, e.g. the number of display devices rendering that content in the home. Thus the CPCM Framework includes this ability in the USI.

$$\text{View/Consume} + \text{Count (Count=0 for non-viewable)}$$

In the CPCM Framework, the USI Restrict Concurrent Rendering (RCR) is optional USI, and is always augmented by the maximum count of concurrent renderings allowed. If the RCR Property is not present in the USI then that content is viewable on any number of rendering devices (but also subject to the eventual propagation restriction specified in the USI, alternatively up to a generally valid maximum number of concurrent renderings which might be specified).

$$V = RCR + Count$$

Disable Content Scrambling

Some content providers require, as a matter of principle or by regulation, to not protect their content by means of cryptographic tools, i.e. scrambling. The CPCM Framework includes such a USI tool, the "Do Not Scramble" USI (DNSC). This is optional USI. If not set then the content is scrambled by default within the CPCM Framework.

$$S = DNSC$$

Time-Based Restriction of Content Usage

There is scope for time-based business models for content usage, for example online rental. The CPCM Framework thus includes USI to allow content usage within a specified time window only.
The Time-Based Restriction (TBR) UR is set by applying one or both of the "FROM" and "UNTIL" parameters in the TBR USI.
An alternative time-based UR is based on usage within a relative time after the content is received, by applying the "FOR" parameter.

$$T = 1 \text{ or both of } \{ FROM + date/time(absolute); \; UNTIL + date/time(absolute) \} \text{ or } \{ FOR + data/time(duration) \}$$

Preferred Embodiments for USI

The prime area for application of the invention is with audio-visual content which is carried or stored in an MPEG-2 Transport Stream [5]. Content disseminated by digital television broadcast is already in this form. Some new forms of content delivery will also use the same format, e. g. video-on-demand over Internet Protocol (IP) services. It can also be applied to MPEG-2 Program Stream format, currently used for example for audio-visual content stored on a Digital Versatile Disk (DVD). The invention thus also allows seamless perpetuation of content URs when content might be converted between these two formats.
Currently digital television services carry MPEG-2 based audio and video content. In the future there will be increasing scope for other content formats, for example MPEG-4 AVC (video) and AAC (audio), but these services also use MPEG-2 Transport Streams as the method of carriage.

Embodiments Using MPEG-2 Systems Section Syntax

According to the present invention, USI is carried in the MPEG-2 Transport Stream along with the content whose URs the USI describes. It is however feasible that the same USI coding method be used to carry the USI separately from the content itself, for example within a Content License (CL), a secure set of data associated with the content in a content protection or DRM system.

**Tab. 1** shows the generic preferred coding of the set of usage properties, parameters and arguments. This is applicable to both of the embodiments using MPEG-2 Systems (namely DVB SI, and copyright descriptor). N represents the number of usage state information properties contained in the instance applied to an item of content. Tab. 1 is also a schema for a decoder.

**Tab. 2** shows the syntax for each usage state information property, and the respective usage parameters and arguments.

Protection of USI against manipulation: USI table contains a keyed hash of the USI information. In the case of encrypted content, this keyed hash shall preferably be encrypted using the content key.

- also in CTA streams

- The USI is to be repeated regularly within the content stream. This has two advantages over the situation where USI is communicated only once, for example at the start of the content stream:

- Random access to the content by a consumer device is enabled, for example to enable the quick acquisition of the usage rules after the broadcast stream has been acquired during ongoing transmission (during TV channel hopping).

- Additional security of the USI, as potentially every repetition of the USI would have to be manipulated in order to circumvent the URs conveyed.

Thus the usage state information is preferably included in data sections that are required to be repeated regularly in the content stream to which the information is associated.

Embodiment with DVB Service Information (SI)

DVB SI [8] defines a syntax for carrying data related to the audio-visual services carried in the DVB Transport Stream.
In this embodiment a new SI descriptor is defined, preferably called the "usage state information descriptor", and is assigned a descriptor tag value.
The usage state information descriptor is carried preferably in the Event Information Table (EIT), indicating the usage state information for that event. The usage state information descriptor can be carried in all types of EIT, thus allowing the advanced indication of usage state information for future events using the same method of communication.
The usage state information descriptor is preferably duplicated in the Service Description Table (SDT), and either alternatively or in addition, in the Program Map Table (PMT), indicating the usage state information of the currently running event for that service.
**Tab. 3** shows the preferred syntax of the usage state information descriptor in DVB SI. The previously described generic coding syntax is applied to the DVB SI descriptor structure.

Embodiment with ATSC Program and System Information Protocol (PSIP)

The invention can also be applied to ATSC [9] systems. Here, similarly to how the invention is applied to DVB systems, a new descriptor is defined to carry usage state information for the associated content.

Embodiment with MPEG Copyright Descriptor

MPEG-2 Systems [5] specifies the "copyright descriptor" as a tool for identifying associating a particular registration authority and content identifier to the content.
This preferred embodiment of the invention foresees the establishment of a new registration authority that might also define a corresponding CPCM or DRM system that would apply the copyright descriptor to associate the content with UR and corresponding USI as disclosed by the invention.

The "additional_copyright_info" field in the copyright descriptor is expanded to contain the coding of USI according to the present invention.

**Tab. 4** shows the preferred syntax of the usage state information descriptor when applied to the MPEG-2 Systems copyright descriptor. The previously described generic coding syntax is applied to the copyright descriptor structure.

The copyright descriptor with usage state information according to the present invention can be applied to content carried in both streams defined in [5]:

- MPEG-2 Transport Stream, where such copyright descriptor is inserted into every instance of the Transport Stream Program Map Section, as a program_info descriptor, in order to convey the usage rights of the associated content.

- MPEG-2 Program Stream, where such copyright descriptor is inserted into every instance of the Program Stream Map, as a program_stream_info descriptor, in order to convey the usage rights of the associated content.

Embodiment Using an XML Schema

It is feasible to define an XML schema code fur CURML which indeed does have the same scope as the binary method of coding USI. Such a schema may be useful in certain content exchange environments.

Aspects of the invention

The present invention covers the following aspects.

- Method for the communication of audio/visual content usage rules in a content protection copy management system in a consumer environment.

- Method to apply a practical and complete set of content usage rules within a CPCM system in the consumer environment, whereby:

- Such usage rules settings are coded in binary form in order to achieve greater efficiency.

- Such usage rules settings are inserted or embedded into the content item or stream to be protected.

- Such usage rules settings are inserted or embedded in a similar format to other auxiliary data accompanying the content item or stream.

- Such usage rules settings are repeated regularly within the content item or stream in order to facilitate quick acquisition of the rules when random access to the content item is exercised.

- Method to convert content usage rule settings from one system (in particular any XML-based coding scheme) to an efficient coding method suitable for broadcast systems and a common CPCM system for the consumer environment.

- Method of communicating the availability or non-availability of certain content processing functions in a graphical user interface according to the usage rule settings for that content, be that item of content already available for rendering, or one that will be available in the future.

- Definition of Mandatory and Assertive UR and USI.

- Definition of each of the UR properties - NB. Copy control USI, also known as Copy Control Information (CCI), is largely prior art; the same applies for time-based restriction to content usage. But the nature of the whole set of UR and USI is an important aspect of the invention.

- Device or software which interprets said USI to derive compliant behavior for the respective content items.

- Device or software which generates said USI in order to indicate or enforce the desired usage rules for the respective content items.

**EP 1 619 571 A1**

- Tool to convert between the different USI encoding methods disclosed herein, for example when the XML schema is used during content authoring, to convert this USI to the SI table format.

- CPCM or DRM system which implements the present UR and/or USI framework to signal and maintain content usage rights in the consumer environment.

- Method of application of the invention to content carried in MPEG-2 Transport Stream.

- Method of application of the invention to content carried in MPEG-2 Program Stream

- Use of MPEG-2 Systems copyright descriptor to associate new RA and CRID, to carry USI with the content, providing a means for devices to acquire the URs for the content.

- Definition of syntax for USI for use in DVB systems.

- Definition of syntax for USI for use in ATSC systems.

- Method whereby the USI is repeated regularly within the content stream, for the purposes of enhancing security and allowing a consumer device to randomly access the content, for example to quickly acquire the usage rules after the broadcast stream has been acquired (during TV channel hopping).

- Method of XML-based coding of UR, resulting in an alternative encoding method which may be useful for certain applications, e. g. an XML schema.

- Method for signaling UR for other content carried in the same delivery system, by using the same USI in program information, e. g. TV schedule data.

- Method for signaling usage rights of content within a CPCM or DRM Content License.

**References**

[1] ISO/IEC1318-11 IPMP on MPEG-2 Systems
[2] Background Article on DVB CPCM:

    http://www.dvb.org/documents/newsletters/ DVB-SCENE-05.pdf

[3] DVB World Conference 2004, Dublin, Presentation on DVB CPCM
[4] TV-Anytime Forum TC211r3 Specification for the Semantics of TV-Anytime Rights Management and Protection Information for Micro-Broadcast:

    ftp: //tva:tva@ftp.bbc.co.uk/pub/Plenary/TV211r4.zip

[5] ISO/IEC13818-1 MPEG-2 Systems
[6] Extensible Rights Markup Language (XrML), info at:

    http://www.xrml.org/get_XrML.asp

[7] Open Digital Rights Language (ODRL) Specification Version 1.1:

    http://www.w3.org/TR/odrl/

[8] ETSI EN 300 468 - Digital Video Broadcast (DVB); Specification for Service Information in DVB Systems
[9] ATSC Standard A/65B: Program and System Information Protocol for Terrestrial Broadcast and Cable

**Abbreviations**

| | |
|---|---|
| **AD** | Authorized Domain |
| **CPCM** | Content Protection and Copy Management |
| **DRM** | Digital Rights Management |
| **DVB** | Digital Video Broadcast |
| **EPG** | Electronic Program Guide |
| **IP** | Internet Protocol |
| **LAN** | Local Area Network |
| **RMPI** | (TV-Anytime) Rights Management and Protection Information |
| **SI** | Service Information |
| **TVA** | TV-Anytime |
| **TVAF** | TV-Anytime Forum |
| **UR** | (Content) Usage Rule(s) |
| **USI** | Usage State Information |
| **WAN** | Wide Area Network |

**Reference Symbols**

| | |
|---|---|
| **CI** | content item |
| **CURI** | content usage rights information |
| **dj** | device; j = 1, 2, 3, ... |
| **N** | network |
| **PDat** | primary data |
| **SDat** | secondary data |
| **UR** | usage right |
| **US** | usage state |
| **USI** | usage state information |

**Claims**

1. Method for providing protected audio/video content for a content protection and copy management system based on a network of devices,

    - comprising processes of:

        (a) obtaining primary data (PDat) as or being representative for a content item (CI) to be provided,
        (b) obtaining content usage rights information (CURI) and/or usage state information (USI) which is descriptive for usage rights (UR) or the usage state (US) with respect to the content item (CI) to be provided,
        (c) embedding (S7) said content usage rights information (CURI) and/or usage state information (USI) or a derivative thereof into said primary data (PDat) or a derivative thereof, thereby generating secondary data (SDat) as or being representative for a content item (CI) to be provided and
        (d) providing said secondary data (SDat) or a derivative thereof as said content item (CI) to be provided with the embedded content usage rights information (CURI) and/or usage state information (USI),

    - wherein said content usage rights information (CURI) and/or usage state information (USI) is embedded in a structured binary coded form within said primary data (PDat) or said derivative thereof
    - in order to ensure efficiency, interoperability, and user friendliness with respect to said content usage rights information (CURI) and/or usage state information (USI) and its handling.

2. Method according to any one of the preceding claims,
    wherein said content usage rights information (CURI) and/or usage state information (USI) is embedded repeatedly
    - in particular regularly - within said primary data (PDat) or said derivative thereof.

3. Method for providing protected audio/video content for a content protection and copy management system based on a network of devices,

- comprising processes of:

(a) obtaining primary data (PDat) as or being representative for a content item (CI) to be provided,
(b) obtaining content usage rights information (CURI) and/or usage state information (USI) which is descriptive for usage rights (UR) or the usage state (US) with respect to the content item (CI) to be provided,
(c) embedding (S7) said content usage rights information (CURI) and/or usage state information (USI) or a derivative thereof into said primary data (PDat) or a derivative thereof, thereby generating secondary data (SDat) as or being representative for a content item (CI) to be provided and
(d) providing said secondary data (SDat) or a derivative thereof as said content item (CI) to be provided with the embedded content usage rights information (CURI) and/or usage state information (USI),

- wherein said content usage rights information (CURI) and/or usage state information (USI) is embedded repeatedly - in particular regularly - within said primary data (PDat) or said derivative thereof
- in order to ensure efficiency, interoperability, and user friendliness with respect to said content usage rights information (CURI) and/or usage state information (USI) and its handling.

4. Method according to claim 3,
wherein said content usage rights information (CURI) and/or usage state information (USI) is embedded in a structured binary coded form within said primary data (PDat) or said derivative thereof.

5. Method according to any one of the preceding claims,
wherein said process (a) of obtaining said primary data (PDat) comprises a sub-process of generating said primary data (PDat).

6. Method according to any one of the preceding claims,
wherein said process (a) of obtaining said primary data (PDat) comprises a sub-process (S1) of receiving said primary data (PDat) or a preform thereof, in particular from an external source.

7. Method according to any one of the preceding claims,
wherein said process (b) of obtaining content usage rights information (CURI) and/or usage state information (USI) comprises a sub-process (S5) of generating said content usage rights information (CURI) and/or usage state information (USI), in particular in a given target format and/or in particular with a given target scope of rights.

8. Method according to any one of the preceding claims,
wherein said process (b) of obtaining content usage rights information (CURI) and/or usage state information (USI) comprises a sub-process (S3) of receiving said content usage rights information (CURI) and/or usage state information (USI), in particular from an external source and/or in a given input format.

9. Method according to claim 8,
wherein one known format is used as said input format.

10. Method according to any one of the preceding claims 8 or 9,
wherein said received content usage rights information (CURI) and/or usage state information (USI) subjected to a sub-process (S4) of usage rights format conversion in order to convert the input format of said received content usage rights information (CURI) and/or usage state information (USI) to a given target format.

11. Method according to claim 10,
wherein in said sub-process (S4) of usage rights format conversion said content usage rights information (CURI) and/or usage state information (USI) is also converted in order to have all cover given a target scope of rights.

12. Method according to any one of the preceding claims,
wherein a single data item is provided as said content item (CI) or as a part thereof, in particular a single file, a single image or the like.

13. Method according to any one of the preceding claims,

wherein a data stream is provided as said content item (CI) or as a part theroef, in particular a sequence of files, a sequence of images and/or sounds or the like.

14. Method according to any one of the preceding claims,
comprising a process (S10) for multiplexing several content items (CI) or pre-forms thereof and in particular for multiplexing the respective content usage rights information (CURI) and/or usage state information (USI) of multiplexed content items (CI).

15. Method according to any one of the preceding claims,
wherein the process (c) of embedding (S7) said content usage rights information (CURI) and/or usage state information (USI) or a derivative thereof into said primary data (PDat) or a derivative thereo is capable of a sub-process of multiplexing in order to combine primary data (PDat) of a plurality of content items (CI) to be provided into a common multiplexed content stream.

16. Method according to any one of the preceding claims,
wherein the process (c) of embedding (S7) said content usage rights information (CURI) and/or usage state information (USI) or a derivative thereof into said primary data (PDat) or a derivative thereof is capable of embedding content usage rights information (CURI) and/or usage state information (USI) about content items (CI) available in the future.

17. Method according to any one of the preceding claims,
wherein from said content usage rights information (CURI) and/or usage state information (USI) other components of auxiliary data already defined are formed.

18. Method according to any one of the preceding claims,
wherein said process (c) of embedding (S7) the target format for said content usage rights information (CURI) and/or usage state information (USI) and/or the target scope for said content usage rights information (CURI) and/or usage state information (USI) are chosen in accordance to an underlying content protection and copy management system or CPCM system.

19. Method according to any one of the preceding claims,
wherein said process (c) of embedding (S7) the target format for said content usage rights information (CURI) and/or usage state information (USI) and/or the target scope for said content usage rights information (CURI) and/or usage state information (USI) are chosen in order to support and/to cover a minimal and/or optimized set of content usage rights information (CURI) and/or usage state information (USI) with respect to an underlying content protection and copy management system or CPCM system.

20. Method according to claim 19,
wherein said set of content usage rights information (CURI) and/or usage state information (USI) comprises a mandatory set of content usage rights information (CURI) and/or usage state information (USI) and an optional or assertive set of content usage rights information (CURI) and/or usage state information (USI).

21. Method according to claim 20,
wherein each content item (CI) to be provided is provided with at least one item of said mandatory set of content usage rights information (CURI) and/or usage state information (USI).

22. Method according to any one of the preceding claims,
wherein said set of content usage rights information (CURI) and/or usage state information (USI) comprises one or an arbitrary plurality of items of the group of items which consists of copy control - in particular as mandatory, propagation restriction - in particular as mandatory, concurrent render count, disable content scrambling and time-based content usage.

23. Method according to claim 22,
wherein the usage state information (USI) for copy control is adapted in order to cover one of the items of the group of items which consists of:

- **"copy never"** (CN) according to which no copy of such content is allowed,
- **"copy once"** (C1) according to which exactly one single copy of the content can be created,

- **"copy one generation"** (C1G) according to which the content can be copied repeatedly, but each copy is then marked as copy no more,
- **"copy no more"** (CNM) according to which no copies are allowed,
- "copy control not asserted" (CCNA) according to which no restriction is placed upon copying of the content.

**24.** Method according to any one of the preceding claims 22 or 23,
wherein the usage state information (USI) for propagation restriction is adapted in order to cover one of the items of the group of items which consists of:

- **"restrict to local environment"** (RTLE) according to which an item of content with this state applied will not be allowed to propagate by electronic transfer beyond the close vicinity of the point at which that content entered the consumer environment, within a respective authorized domain (AD),
- **"restrict to authorized domain (AD)"** (RTAD) according to which an item of content with this state applied will not be allowed to propagate beyond the set of CPCM-compliant equipment belonging to the user receiving the content, thus allowing the user to use the content at home, access it from a remote location, for example a second home or from a mobile handset,
- **"restrict to content protection and copyright management system (CPCM)"** (RTCPCM) according to which an item of content is to remain protected by the CPCM framework, but propagation is allowed to any other authorized domain (AD),
- **"propagation restriction not asserted"** (PRNA) according to which an item of content can be redistributed also outside of the content protection and copyright management system or CPCM framework.

**25.** Method according to any one of the preceding claims 22 to 24,
wherein the usage state information (USI) is adapted in order to cover the items of **"concurrent render count"**, in particular in order to be able to restrict the number of concurrent renderings of an item of content.

**26.** Method according to any one of the preceding claims 22 to 25,
wherein the usage state information (USI) is adapted in order to cover the items of **"disable content scrambling",** in particular in order to be able to not allow to protection of content by means of cryptographic tools, i. e. by scrambling.

**27.** Method according to any one of the preceding claims 22 to 26,
wherein the usage state information (USI) is adapted in order to cover the items of **"time-based restriction of content usage",** in particular in order to be able to allow a temporary usage of a given content item only.

**28.** Method according to any one of the preceding claims,
wherein the generation and/or the display of icons is enabled which indicates allowed and/or disallowed functionalities with respect to the respective provided content item (CI).

**29.** System or apparatus which is adapted and arranged and which comprises means for realizing the method for providing content according to any one of the preceding claims 1 to 28 and the steps thereof.

**30.** Computer program product comprising computer means which is adapted and arranged in order to realize the method for providing content according to any one of the preceding claims 1 to 28 and the system according to claim 29, when it is executed on a computer or a digital signal processing means.

**31.** Computer readable storage medium comprising a computer program product according to claim 30.

**32.** Usage rights information (CURI) and/or usage state information (USI), in particular for protected audio/video content for a content protection and copy management system based on a network of devices,
comprising mandatory items only.one or an arbitrary plurality of items of the group of items which consists ofcopy control - in particular as mandatory, propagation restriction - in particular as mandatory, concurrent render count, disable content scrambling and time-based content usage.

**33.** Usage rights information (CURI) and/or usage state information (USI) according to claim 32,
comprising one or an arbitrary plurality of items of the group of items which consists ofcopy control - in particular as mandatory, propagation restriction - in particular as mandatory, concurrent render count - in particular as assertive, disable content scrambling - in particular as assertive - and time-based content usage - in particular as assertive.

**34.** Usage rights information (CURI) and/or usage state information (USI) according to any one of the preceding claims 32 or 33,
wherein the usage state information (USI) for copy control is adapted in order to cover one of the items of the group of items which consists of:

- **"copy never"** (CN) according to which no copy of such content is allowed,
- **"copy once"** (C1) according to which exactly one single copy of the content can be created,
- **"copy one generation"** (C1G) according to which the content can be copied repeatedly, but each copy is then marked as copy no more,
- **"copy no more"** (CNM) according to which no copies are allowed,
- **"copy control not asserted"** (CCNA) according to which no restriction is placed upon copying of the content.

**35.** Usage rights information (CURI) and/or usage state information (USI) according to any one of the preceding claims 32 to 34,
which is adapted in order to cover one of the items of the group of items which consists of:

- **"restrict to local environment"** (RTLE) according to which an item of content with this state applied will not be allowed to propagate by electronic transfer beyond the close vicinity of the point at which that content entered the consumer environment, within a respective authorized domain (AD),
- **"restrict to authorized domain (AD)"** (RTAD) according to which an item of content with this state applied will not be allowed to propagate beyond the set of CPCM-compliant equipment belonging to the user receiving the content, thus allowing the user to use the content at home, access it from a remote location, for example a second home or from a mobile handset,
- **"restrict to content protection and copyright management system (CPCM)"** (RTCPCM) according to which an item of content is to remain protected by the CPCM framework, but propagation is allowed to any other authorized domain (AD),
- **"propagation restriction not asserted"** (PRNA) according to which an item of content can be redistributed also outside of the content protection and copyright management system or CPCM framework.

**36.** Usage rights information (CURI) and/or usage state information (USI) according to any one of the preceding claims 32 to 35,
which is adapted in order to cover the items of **"concurrent render count"**, in particular in order to be able to restrict the number of concurrent renderings of an item of content.

**37.** Usage rights information (CURI) and/or usage state information (USI) according to any one of the preceding claims 32 to 36,
which is adapted in order to cover the items of **"disable content scrambling",** in particular in order to be able to not allow to protection of content by means of cryptographic tools, i. e. by scrambling.

**38.** Usage rights information (CURI) and/or usage state information (USI) according to any one of the preceding claims 32 to 37,
which is adapted in order to cover the items of **"time-based restriction of content usage",** in particular in order to be able to allow a temporary usage of a given content item only.

**39.** Usage rights information (CURI) and/or usage state information (USI) according to any one of the preceding claims 32 to 38,

- wherein a first or usage property information part (UProp) is used in order to indicate one of said usage rights information (CURI) and/or usage state information (USI) items and
- wherein a second or usage parameter information part (UPar) is used in order to further specify the usage rights information (CURI) and/or usage state information (USI) item indicated by said first or usage purpose information part (UPur).

**40.** Usage rights information (CURI) and/or usage state information (USI) according to claim to 39,

- wherein said first or usage property information part (UProp) is mapped in a one-to-one relationship onto a first finite binary code, in particular consisting of four binary bits and/or
- wherein said second or usage parameter information part (UPar) is mapped in a one-to-one relationship onto a second finite binary code, in particular consisting of four binary bits.

41. Usage rights information (CURI) and/or usage state information (USI) according to claim to 40,

- wherein said first or usage property information part (UProp) is embedded within said usage rights information (CURI) and/or usage state information (USI) as an ordered concatenation of the bits of said first finite binary code of the respective usage rights information (CURI) and/or usage state information (USI) item, and/or
- wherein said second or usage parameter information part (UPar) is embedded within said usage rights information (CURI) and/or usage state information (USI) as an ordered concatenation of the bits of said second finite binary code of the further specification of the respective usage rights information (CURI) and/or usage state information (USI) item.

42. Usage rights information (CURI) and/or usage state information (USI) according to claim to 41,
which is embedded within said usage rights information (CURI) and/or usage state information (USI) as an ordered concatenation of the bits of said first finite binary code of the respective usage rights information (CURI) and/or usage state information (USI) item for said first or usage property information part (UProp) and the bits of said second finite binary code of the further specification of the respective usage rights information (CURI) and/or usage state information (USI) item for said second or usage parameter information part (UPar).

43. Usage rights information (CURI) and/or usage state information (USI) according to claim to 42,
which is formed with respect to said bits of said first finite binary code of the respective usage rights information (CURI) and/or usage state information (USI) item for said first or usage property information part (UProp) and with respect to said bits of said second finite binary code of the further specification of the respective usage rights information (CURI) and/or usage state information (USI) item for said second or usage parameter information part (UPar) according to the following table

| Usage_ _property (Uprop) | Description | Usage_ _parameter (Upar) | Description | Argument |
|---|---|---|---|---|
| 0000 | Copy Control | 0000 | Copy Never | None |
| | | 0001 | Copy Once | None |
| | | 0010 | Copy One Generation | 8 bits: Maximum number of copies; 0x0 means no restriction; 0x1 is equivalent to Copy Once |
| | | 0011 | Copy No More | None |
| | | 0100 | Copy Control Not Asserted | None |
| | | 0101 - 1111 | Reserved for future use | None |
| 0001 | Propagation Restriction | 0000 | Restrict to local environment | None |
| | | 0001 | Restrict to authorised domain | None |
| | | 0010 | Restrict to protected realm | None |
| | | 0011 | Propagation restriction not asserted | None |

Table continued

| Usage_ _property (Uprop) | Description | Usage_ _parameter (Upar) | Description | Argument |
|---|---|---|---|---|
| | | 0100 - 1111 | Reserved for future use | None |
| 0010 | Concurrent Render Restriction | 0000 | Reserved | 8 bits: Maximum number of concurrent renderings |
| 0011 | Disable Content Scrambling | 0000 | Reserved | None |
| 0100 | Time-based Usage Restriction | 0000 | From (absolute data/time) | 40 bits: as for *start_time* field in EIT section |
| | | 0001 | Until (absolute data/time) | 40 bits: as for *start_time* field in EIT section |
| | | 0010 | For (relative time) | 24 bits: as for duration field in EIT section |
| | | 0011 - 1111 | Reserved | None |
| 0101 - 1111 | Reserved for future use | 0000 - 1111 | Reserved | None |

Content delivered within
DRM System

Personal
Computer
With DRM
Client

**N**

d3

Internet
Multicast
Receiver

Home Network
Incorporating
CPCM System

Content delivered within
DRM or Broadcast System

d4

d2

Content
Recording/Playback
Device

Content delivered within
Broadcast System

Satellite
Broadcast
Receiver

d5

Content Usage within
CPCM System

d1

Content
Rendering
Device

Content delivered via
Pre-recorded storage medium

d6

d7

Content
Playback
Device

Content
Rendering
Device

**Fig. 1**

Fig. 2

EP 1 619 571 A1

EP 1 619 571 A1

Fig. 3

```
            ( BEGIN )
                │
                ▼
        ┌──────────────┐
  T1 ───│  Parse Input │
        │  Usage Right │
        └──────────────┘
                │
                ▼
             ╱Does a╲
  T2 ──── ╱ defined mapping ╲        NO
         ╲   to CPCM    ╱──────────────┐
          ╲   System  ╱                │
           ╲  Exist? ╱                 │
                │                      │
              YES                      ▼
                ▼              ┌──────────────┐
        ┌──────────────┐       │ Discard Input│
  T3 ───│ Generate CPCM│       │ Usage Right  │─── T4
        │  Usage Right │       └──────────────┘
        └──────────────┘                │
                │                        │
                ▼◄───────────────────────┘
            ╱  More  ╲
      YES ╱   rights   ╲
     ┌────╲  defined? ╱
     │  T5 ╲        ╱
     │        │
     │       NO
     │        ▼
     │ ┌──────────────────┐
     │ │Output CPCM Content│─── T6
     │ │Usage Rights Data  │
     │ └──────────────────┘
     │        │
     │        ▼
     │    ( END )
```

| Syntax | No. of bits | Identifier |
|---|---|---|
| generic_usage_state_information_coding_syntax(){ | | |
|     for (i=0;i<N;i++){ | | |
|         usage_property | 4 | uimsbf |
|         usage_parameter | 4 | uimsbf |
|         If (((usage_property == 0000) && (usage_parameter == 0010)) \|\| (usage_property == 0010)){ | | |
|             usage_argument | 8 | uimsbf |
|         } | | |
|         If ((usage_property == 0100) && ((usage_parameter == 0000) \|\| (usage_parameter == 0001))) { | | |
|             usage_argument | 40 | bslbf |
|         } | | |
|         If ((usage_property == 0100) && (usage_parameter == 0010)) { | | |
|             usage_argument | 24 | uimsbf |
|     } | | |
| } | | |

Tab. 1

Fig. 4

EP 1 619 571 A1

| Usage property | Description | Usage parameter | Description | Argument |
|---|---|---|---|---|
| 0000 | Copy Control | 0000 | Copy Never | None |
| | | 0001 | Copy Once | None |
| | | 0010 | Copy One Generation | 8 bits: Maximum number of copies; 0x0 means no restriction; 0x1 is equivalent to Copy Once |
| | | 0011 | Copy No More | None |
| | | 0100 | Copy Control Not Asserted | None |
| | | 0101 – 1111 | Reserved for future use | None |
| 0001 | Propagation Restriction | 0000 | Restrict to local environment | None |
| | | 0001 | Restrict to authorised domain | None |
| | | 0010 | Restrict to protected realm | None |
| | | 0011 | Propagation restriction not asserted | None |
| | | 0100 - 1111 | Reserved for future use | None |
| 0010 | Concurrent Render Restriction | 0000 | Reserved | 8 bits: Maximum number of concurrent renderings |
| 0011 | Disable Content Scrambling | 0000 | Reserved | None |
| 0100 | Time-based Usage Restriction | 0000 | From (absolute data/time) | 40 bits: as for *start_time* field in EIT section |
| | | 0001 | Until (absolute data/time) | 40 bits: as for *start_time* field in EIT section |
| | | 0010 | For (relative time) | 24 bits: as for *duration* field in EIT section |
| | | 0011 – 1111 | Reserved | None |
| 0101 – 1111 | Reserved for future use | 0000-1111 | Reserved | None |

Fig. 5                    Tab. 2

EP 1 619 571 A1

| Syntax | No. of bits | Identifier |
|---|---|---|
| usage_state_information_descriptor(){ | | |
|     descriptor_tag | 8 | uimsbf |
|     descriptor_length | 8 | uimsbf |
|     generic_usage_state_information_coding_syntax(){ | | |
|     } | | |
| } | | |

Tab. 3

Fig. 6

EP 1 619 571 A1

| Syntax | No. of bits | Identifier |
|---|---|---|
| copyright_descriptor(){ | | |
|     descriptor_tag | 8 | uimsbf |
|     descriptor_length | 8 | uimsbf |
|     copyright_identifier | 32 | uimsbf |
|     generic_usage_state_information_coding_syntax(){ | | |
|       } | | |
| } | | |

Tab. 4

Fig. 7

EP 1 619 571 A1

EP 1 619 571 A1

```
┌─────────────────────────┐
│   Obtain Primary Data PDat   │ ⟶ (a)
│     for Content Item CI      │
└─────────────────────────┘
             │
             ▼
┌─────────────────────────┐
│      Obtain Usage Rights      │ ⟶ (b)
│   Information CURI/Usage     │
│   State Information USI for   │
│        Content Item CI         │
└─────────────────────────┘
             │
             ▼
┌─────────────────────────┐
│    Embedding Usage Rights     │ ⟶ (c)
│    Information CURI/Usage     │
│    State Information USI into  │
│    Primary Data PDat ⇒       │
│      Secondary Data SDat       │
└─────────────────────────┘
             │
             ▼
┌─────────────────────────┐
│      Provide SDat with        │ ⟶ (d)
│   Embedded CURI/USI as      │
│  Content Item CI for Content  │
│     Protection and Copy       │
│     Management System         │
└─────────────────────────┘
```

Fig. 8

EP 1 619 571 A1

```
┌─────────────────────────────┐
│   Obtain Secondary Data     │ ⌇(a')
│   SDat for Content Item CI   │
└─────────────────────────────┘
              │
              ▼
┌─────────────────────────────┐
│    Extract Usage Rights      │ ⌇(b')
│   Information CURI/Usage      │
│   State Information USI for   │
│   Content Item CI from SDat   │
└─────────────────────────────┘
              │
              ▼
┌─────────────────────────────┐
│  Generate CURI/USI display   │ ⌇(c')
│  item which is decriptive for │
│   the CURI/USI extracted      │
│   from Secondary Data SDat    │
└─────────────────────────────┘
              │
              ▼
┌─────────────────────────────┐
│  Display CURI/USI display    │ ⌇(d')
│    item in order to           │
│  conveniently inform a user   │
│  (in part. without receiving  │
│       content items)          │
└─────────────────────────────┘
```

Fig. 9

**European Patent Office**

## EUROPEAN SEARCH REPORT

Application Number

EP 04 01 7019

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 03/039155 A (SENOH TAKANORI ; MATSUSHITA ELECTRIC IND CO LTD (JP); JI MING (SG); TA) 8 May 2003 (2003-05-08) <br> * page 7, line 8 - line 11 * <br> * page 12, line 4 - line 14 * | 1-43 | G06F1/00 <br> H04N7/24 |
| A | WO 03/075575 A (SENOH TAKANORI ; MATSUSHITA ELECTRIC IND CO LTD (JP); JI MING (SG); HU) <br> 12 September 2003 (2003-09-12) <br> * page 33, line 7 - page 34, line 11; claim 19 * | 1-4 | |
| A | EP 1 282 262 A (SONY CORP) <br> 5 February 2003 (2003-02-05) <br> * paragraph [0149] - paragraph [0150] * | 1-4 | |
| A | US 2004/071312 A1 (TAKASHIMA YOUICHI ET AL) 15 April 2004 (2004-04-15) <br> * paragraph [0016] * | 1-4 | |
| A | US 6 611 607 B1 (RHOADS GEOFFREY B ET AL) 26 August 2003 (2003-08-26) <br> * the whole document * | 14,15 | TECHNICAL FIELDS SEARCHED (Int.Cl.7) <br><br> G06F <br> H04N <br> G06T |

The present search report has been drawn up for all claims

| Place of search | Date of completion of the search | Examiner |
|---|---|---|
| Munich | 10 September 2004 | Meis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 01 7019

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2004

| Patent document cited in search report | | Publication date | Patent family member(s) | | Publication date |
|---|---|---|---|---|---|
| WO 03039155 | A | 08-05-2003 | EP | 1442594 A2 | 04-08-2004 |
| | | | WO | 03039155 A2 | 08-05-2003 |
| | | | JP | 2004005365 A | 08-01-2004 |
| WO 03075575 | A | 12-09-2003 | EP | 1397919 A1 | 17-03-2004 |
| | | | WO | 03075575 A1 | 12-09-2003 |
| | | | JP | 2004129197 A | 22-04-2004 |
| | | | US | 2004139023 A1 | 15-07-2004 |
| EP 1282262 | A | 05-02-2003 | EP | 1282262 A1 | 05-02-2003 |
| | | | AU | 1547402 A | 15-08-2002 |
| | | | CA | 2371124 A1 | 09-08-2002 |
| | | | CN | 1371056 A | 25-09-2002 |
| | | | CN | 1463515 T | 24-12-2003 |
| | | | EP | 1231532 A2 | 14-08-2002 |
| | | | WO | 02080446 A1 | 10-10-2002 |
| | | | JP | 2002359616 A | 13-12-2002 |
| | | | TW | 569119 B | 01-01-2004 |
| | | | US | 2002114466 A1 | 22-08-2002 |
| | | | US | 2003159033 A1 | 21-08-2003 |
| US 2004071312 | A1 | 15-04-2004 | EP | 0984616 A2 | 08-03-2000 |
| | | | JP | 2001016438 A | 19-01-2001 |
| | | | US | 6704431 B1 | 09-03-2004 |
| US 6611607 | B1 | 26-08-2003 | US | 6614914 B1 | 02-09-2003 |
| | | | US | 5862260 A | 19-01-1999 |
| | | | US | 5841978 A | 24-11-1998 |
| | | | US | 5636292 A | 03-06-1997 |
| | | | AU | 3801301 A | 14-08-2001 |
| | | | WO | 0157783 A1 | 09-08-2001 |
| | | | US | 2003103645 A1 | 05-06-2003 |
| | | | US | 2004037449 A1 | 26-02-2004 |
| | | | AU | 2936201 A | 24-07-2001 |
| | | | WO | 0152181 A1 | 19-07-2001 |
| | | | US | 2002120849 A1 | 29-08-2002 |
| | | | US | 2003053653 A1 | 20-03-2003 |
| | | | US | 2003128861 A1 | 10-07-2003 |
| | | | US | 2004022444 A1 | 05-02-2004 |
| | | | US | 2003174862 A1 | 18-09-2003 |
| | | | US | 2003231785 A1 | 18-12-2003 |
| | | | US | 6516079 B1 | 04-02-2003 |
| | | | US | 6535617 B1 | 18-03-2003 |
| | | | US | 6590996 B1 | 08-07-2003 |
| | | | US | 2004125983 A1 | 01-07-2004 |
| | | | US | 6385329 B1 | 07-05-2002 |

## ANNEX TO THE EUROPEAN SEARCH REPORT
## ON EUROPEAN PATENT APPLICATION NO.

EP 04 01 7019

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2004

| Patent document cited in search report | Publication date | Patent family member(s) | Publication date |
|---|---|---|---|
| US 6611607 B1 | | US 2004153649 A1 | 05-08-2004 |
| | | US 2002009208 A1 | 24-01-2002 |
| | | US 2002006212 A1 | 17-01-2002 |
| | | US 2002021824 A1 | 21-02-2002 |
| | | US 2002067844 A1 | 06-06-2002 |
| | | US 2002090112 A1 | 11-07-2002 |
| | | US 2002033844 A1 | 21-03-2002 |
| | | US 2002090113 A1 | 11-07-2002 |
| | | US 2002164049 A1 | 07-11-2002 |
| | | US 2002186886 A1 | 12-12-2002 |
| | | US 2002186887 A1 | 12-12-2002 |
| | | US 2003033530 A1 | 13-02-2003 |
| | | US 2003091189 A1 | 15-05-2003 |
| | | US 2003039377 A1 | 27-02-2003 |
| | | US 2003102660 A1 | 05-06-2003 |
| | | US 2003086585 A1 | 08-05-2003 |
| | | US 2003142847 A1 | 31-07-2003 |
| | | US 2003133592 A1 | 17-07-2003 |
| | | US 2004057581 A1 | 25-03-2004 |
| | | US 2003050961 A1 | 13-03-2003 |
| | | US 2004001608 A1 | 01-01-2004 |
| | | US 2004005093 A1 | 08-01-2004 |
| | | US 2003228031 A1 | 11-12-2003 |
| | | US 2003219144 A1 | 27-11-2003 |
| | | US 6700990 B1 | 02-03-2004 |
| | | US 6307949 B1 | 23-10-2001 |
| | | US 6381341 B1 | 30-04-2002 |
| | | US 6408082 B1 | 18-06-2002 |
| | | US 6567533 B1 | 20-05-2003 |

EPO FORM P0459

For more details about this annex : see Official Journal of the European Patent Office, No. 12/82